Europäisches Patentamt

European Patent Office

Office européen des brevets

(11) Publication number: **0 324 398 B1**

# EUROPEAN PATENT SPECIFICATION

(45) Date of publication of patent specification: **15.09.93**

(21) Application number: **89100233.9**

(22) Date of filing: **07.01.89**

The file contains technical information submitted after the application was filed and not included in this specification

(51) Int. Cl.⁵: **C08L  25/02**, //(C08L25/02, 53:00,101:00),(C08L25/02,51:00, 101:00)

(54) **Styrene-based resin composition.**

(30) Priority: **13.01.88 JP 3844/88**
**14.01.88 JP 4923/88**
**20.05.88 JP 121700/88**

(43) Date of publication of application:
**19.07.89 Bulletin  89/29**

(45) Publication of the grant of the patent:
**15.09.93 Bulletin  93/37**

(84) Designated Contracting States:
**AT BE CH DE ES FR GB IT LI NL SE**

(56) References cited:
**FR-A- 2 356 694**
**US-A- 4 716 197**

**WPIL, FILE SUPPLIER, no. 87-353232, Derwent Publications Ltd, London GB**

(73) Proprietor: **IDEMITSU KOSAN COMPANY LIMITED**
**1-1, Marunouchi 3-chome Chiyoda-ku Tokyo(JP)**

(72) Inventor: **Sumitomo, Takashi**
**2326, Anesaki**
**Ichihara-shi Chiba-ken(JP)**
Inventor: **Funaki, Keisuke**
**216, Imazuasayama**
**Ichihara-shi Chiba-ken(JP)**

(74) Representative: **Türk, Gille, Hrabal, Leifert**
**Brucknerstrasse 20**
**D-40593 Düsseldorf (DE)**

EP 0 324 398 B1

## Description

The present invention relates to a styrene-based resin composition and more particularly to a styrene-based resin composition containing a styrene-based resin having mainly syndiotactic configuration, a thermoplastic resin other than the styrene-based resin, and a rubber-like polymer, which is excellent in heat resistance and impact resistance.

In general, thermoplastic resins are excellent in moldability and have sufficiently high stiffness as compared with other materials and thus are used in production of various products, e.g., household articles, electric appliances and machine parts.

The thermoplastic resins, however, have a disadvantage in that heat resistance is not sufficiently high, although they have excellent properties as described above.

The present inventors' group has succeeded in developing styrene-based polymers having a high syndiotacticity and further developed thermoplastic resin compositions containing the above styrene-based polymers (Japanese Patent Application Laid-Open Nos. 104818/1987 and 257950/1987).

Additionally, US-A-4 716 197 discloses a resin composition containing (A) polystyrene, (B) a thermoplastic resin (HDPE) and (C) a "rubber-like" polymer (EPDM graft polystyrene) as main components.

In a composition of resins which are inherently not compatible with each other, the strength in the interface of phases is inevitably poor, and thus the effect of improvement by compounding is limited.

An object of the present invention is to provide a styrene-based resin composition having both excellent impact resistance and heat resistance.

Another object of the present invention is to provide a styrene-based resin composition which is excellent in compatibility among components.

Still another object of the present invention is to provide a styrene-based resin composition which has excellent physical properties such as tensile strength and modulus of elasticity as well as impact resistance and heat resistance.

Still another object of the present invention is to provide a styrene-based resin composition having excellent physical properties, which is suitable as a material for injection molding, extrusion molding and so forth.

The present invention relates to a styrene-based resin composition containing (A) a styrene-based resin having a syndiotactic configuration, of at least 30% in terms of racemic pentad,(B) a thermoplastic resin other than Component (A), and (C) at least one rubber-like polymer as the main components, with the exception of the composition consisting of 66.7 % b.w. polystyrene having syndiotactic configuration, 28.6 % b.w. ethylene-propylene rubber and 4.7 % b.w. of a styrene-hydrogenated butadiene block copolymer.

The present invention also relates to a styrene-based resin composition containing the above Components (A), (B), (C), and (D) an inorganic filler as the main components.

## DESCRIPTION OF PREFERRED EMBODIMENTS

The resin composition of the present invention contains Components (A), (B) and (C) as main components.

Component (A) is a styrene-based resin with mainly syndiotactic configuration. The styrene-based resin with mainly syndiotactic configuration refers to a polymer with mainly stereo structure such that phenyl groups or substituted phenyl groups as side chains are located alternately at opposite positions relative to the main chain composed of carbon-carbon bonds. The tacticity is quantitatively determined by a nuclear magnetic resonance method using a carbon isotope ($^{13}$C-NMR method). The tacticity as determined by the $^{13}$C-NMR method is indicated in terms of proportions of structural units continuously connected to each other, i.e., a pentad in which five structural units are connected to each other. The styrene-based resin with mainly syndiotactic configuration has syndiotactic configuration such that the proportion in a pentad (racemi pentad) is at least 30% and preferably at least 50%. The styrene-based resin includes polystyrene, poly-(alkylstyrene), poly(halogeneted styrene), poly(alkoxystyrene), poly(vinyl benzoate), and their mixtures, and copolymers containing the above polymers as main components.

The poly(alkylstyrene) includes polymethylstyrene, polyethylstyrene, polyisopropylstyrene, and poly-(tert-butylstyrene). The poly(halogenated styrene) includes polychlorostyrene, polybromostyrene, and polyfluorostyrene. The poly(alkoxystyrene) includes polymethoxystyrene and polyethoxystyrene. Of these polymers, polystyrene, poly(p-methylstyrene), poly(m-methylstyrene), poly(p-tertbutylstyrene), poly(p-chlorostyrene), poly(m-chlorostyrene), poly(p-fluorostyrene), and a copolymer of styrene and p-methylstyrene are most preferable.

The styrene-based resin to be used in the present invention is not critical in molecular weight. The weight average molecular weight is preferably at least 10,000, more preferably 50,000 to 5,000,000 and most preferably 100,000 to 3,000,000. The molecular weight distribution is not critical and may be narrow or wide.

The styrene-based resin to be used in the present invention can be produced, for example, by polymerizing a styrene-based monomer (corresponding to the above styrene-based resin) with the use of a catalyst containing a titanium compound, and a condensate of water and trialkylaluminum in the presence of an inert hydrocarbon solvent or in the absence of a solvent (Japanese Patent Application Laid-Open No. 187708/1987).

Component (B) is a thermoplastic resin other than Component (A). Various kinds of thermoplastic resins can be used as Component (B) depending upon the purpose of use of the resin composition. Thermoplastic resins which are not compatible with Component (A) are preferably used as Component (B). Preferred examples of these thermoplastic resins include condensation polymers such as polyester (specifically, polyethylene terephthalate, polybutylene terephthalate, and polyarylate, ), polycarbonate, polyether (polysulfone, polyethersulfone, ), polyamide (nylon® 6, nylon® 66 ) and polyoxymethylene; acrylate polymers such as polyacrylic acid, polyacrylic acid ester and polymethylmethacrylate; polyolefins such as polyethylene (low density polyethylene (LDPE), linear low density polyethylene (LLDPE), high density polyethylene (HDPE), ), polypropylene, polybutene-1, poly4-methylpentene-1 and ethylene-propylene copolymer; and halogen-containing polymers such as polyvinyl chloride, polyvinylidene chloride and polyvinylidene fluoride.

Various rubber-like polymers can be used as Component (C). The rubber-like polymers belonging to the following Groups(I),(II) or (III) are preferred.

Group (I)

Polymer in Group (I) are rubber-like polymers which are produced by polymerising vinyl monomers in the presence of polymers obtained through polymerization of one or more monomers selected from the group consisting of alkyl acrylate, alkyl methacrylate and polyfunctional monomers containing a conjugated diene double bond. In the alkyl acrylate and the alkyl methacrylate, an alkyl group having 2 to 10 carbon atoms is suitable. Specific examples of the alkyl acrylate and the alkyl methacrylate are ethyl acrylate, butyl acrylate, 2-ethylhexyl acrylate and n-octyl methacrylate.

Examples of the polyfunctional monomers containing a conjugated diene type double bond are; conjugated diene compounds such as butadiene and isoprene, and compounds containing non-conjugated double bonds, as well as conjugated diene type double bonds, in the molecule thereof. Specific examples are 1-methyl-2-vinyl-4,6-heptadiene-1-ol, 7-methyl-3-methylene-1,6-octadiene, and 1,3,7-octatriene.

As Component (C), rubber-like polymers which are produced by polymerizing a vinyl monomer in the presence of polymers or copolymers obtained by polymerizing one of the above monomers or by copolymerizing two or more of the above monomers, i.e., graft copolymers of the vinyl monomer to the above polymers or copolymers are used. The vinyl monomer includes aromatic vinyl compounds such as styrene and α-methylstyrene, acrylic acid esters such as methyl acrylate and ethyl acrylate, methacrylic acid esters such as methyl methacrylate and ethyl methacrylate, vinyl cyanide compounds such as acrylonitrile and methacrylonitrile, and vinyl esters such as vinyl acetate and vinyl propionate. One or more of these monomers are graft polymerized.

Polymerization can be carried out by various methods such as bulk polymerization, suspension polymerization and emulsion polymerization. Polymers obtained by emulsion polymerization are particularly preferred.

Suitable examples of the rubber-like polymers in Group (I) are shown below.
(1) Polymers obtained by polymerizing one or more of vinyl monomers in the presence of polymers containing alkyl acrylate and/or alkyl methacrylate (hereinafter referred to as "alkyl-acrylates") as main component.

Polymers containing alkyl acrylates as the main component are polymers obtained by polymerizing 70% or more by weight of alkyl acrylates and 30% or less by weight of other vinyl monomers copolymerizable with the alkyl acrylates, such as methyl methacrylate, acrylonitrile, vinyl acetate and styrene. Polymers obtained by using a suitable amount of a polyfunctional monomers, e.g., divinylbenzene, ethylene dimethacrylate, triallyl cyanurate and triallyl isocyanurate as a cross-linking agent are also included in the above polymers.

A specific example of rubber-like polymers belonging to (1) is an MAS elastomer, obtained by graft polymerizing styrene to a copolymer of methyl methacrylate and butyl acrylate in a latex form. Such MAS elastomers are commercially available as EXL-2330 (trade name, produced by Rohm & Haas Co., Ltd., USA), KM-330 (trade name, produced by Rohm & Haas Co., Ltd., USA) and M-101 (trade name, produced by Kanegafuchi Kagaku Kogyo Co., Ltd.).

(2) Graft polymers obtained by copolymerizing one or more vinyl monomers to copolymers of alkyl acrylate and/or alkyl methacrylate and polyfunctional polymerizable monomers containing conjugated diene-type double bonds. In preparation of the graft polymers, as in the case of (1), vinyl monomers and a cross-liking agent can be added.

Specific examples of the rubber-like polymers belonging to (2) are; MABS elastomers, e.g. a graft copolymer obtained by adding styrene and methyl methacrylate to a rubber latex which has been obtained by copolymerizing octyl acrylate and butadiene (7:3) and then graft polymerizing them, and MBS elastomers, e.g. a graft copolymer obtained by adding styrene to a rubber latex which has been obtained by copolymerizing methyl methacrylate and butadiene and graft polymerizing them. As the MBS elastomer, Metablen® C-223 (trade name, produced by Mitsubishi Rayon Co., Ltd.) is commercially available.

(3) Other elastomers include; an AABS elastomer, obtained by adding acrylonitrile and styrene to a rubber latex which has been obtained by copolymerizing butadiene and alkyl acrylate, and then graft polymerizing them, and a SBR elastomer (trade name: Metablen® IP-2, produced by Mitsubishi Rayon Co., Ltd.), obtained by graft polymerizing styrene to polybutadiene. These rubber-like polymers of Group I are core shell type rubbers and are solid rubbers having dispersibility in Component (A).

The particle size of the rubber-like polymer of Group I varies with the purpose of use of the composition or characteristics required therefor and cannot be determined unconditionally. In general, the average particle diameter (volume average particle diameter) of the rubber-like polymer in the composition is 0.1 to 4 $\mu$m and preferably 0.2 to 3 $\mu$m. Herein, volume average particle diameter (d) is defined by the following equation.

$$d = \Sigma d_i^4 / \Sigma d_i^3,$$

wherein $d_i$ stands for a diameter of the i-th particle.

Group (II)

Polymers in Group (II) are rubber-like elastomers comprising one or more copolymers selected from a-b type block copolymers, a-b-a type block copolymers, b-a-b type block copolymers, a grafted b copolymers and b grafted a copolymers.

As portion a of the a-b, a-b-a or b-a-b type block copolymer, atactic polystyrene is preferred. Compatibility of the a-b, a-b-a or b-a-b type block copolymer with the component (A) is markedly high within the preferred range. As portion b, one or more polymers selected from conjugated diene, hydrogenated product of conjugated diene, conjugated diene modified with acid anhydride and hydrogenated product of conjugated diene modified with acid anhydride can be given. Examples of portion b include butadiene, isoprene, hydrogenated butadiene, hydrogenated isoprene, butadiene modified with maleic anhydride, hydrogenated product of butadiene modified with maleic anhydride, isoprene modified with maleic anhydride and hydrogenated product of isoprene modified with maleic anhydride can be given.

Graft copolymers which can be used are indicated in terms of a grafted b copolymers or b grafted a copolymers.

Portion a generally exhibits good affinity (dispersibility) to Component (A) in the block or graft copolymers comprising portions a and b. Examples of such rubber-like polymers are a styrene-butadiene block copolymer rubber (SB, SBS, BSB), rubbers obtained by partially or completely hydrogenating the butadiene portion of a styrene-butadiene block copolymer (SEBS, SEB), a styrene-isoprene block copolymer rubber (SI, SIS, ISI), rubbers obtained by partially or completely hydrogenating the isoprene portion of a styrene-isoprene block copolymer (SEP, SEPS), SBS modified with maleic anhydride, SEBS modified with maleic anhydride, SEP modified with maleic anhydride and SIS modified with maleic anhydride.

Since these copolymers all have the styrene unit, they have good dispersibility in the styrene-based polymers with mainly syndiotactic configuration as Component (A). Thus, physical properties are markedly improved.

When polyolefin, such as LDPE, LLDPE, HDPE, polypropylene (PP), polybutene-1 (PB-1) or poly4-methyl pentene-1 is used as thermoplastic resin of Component (B); SBS, SIS, SEBS, SEPS, SB, SI, BSB, ISI or hydrogenated product thereof is suitable as Component (C). The reason for this is that the butadiene, isoprene, ethylene-butylene or ethylene-propylene portion of the rubber-like polymer exhibits good affinity

4

to the polyolefin, and that the styrene portion of the rubber-like polymer exhibits good affinity to Component (A).

When a thermoplastic resin having at least one polar substituent of an amino group, a carbonyl group and a hydroxy group at terminal position thereof, for example, polyester, polyamide and polycarbonate is used as Component (B), maleated SBS (SBS modified with maleic anhydride), maleated SEBS, maleated SEP or maleated SIS is suitable as Component (C). The reason for this that the maleated butadiene, maleated isoprene, maleated ethylene-butadiene or maleated ethylene-propylene portion of the rubber-like polymer has polarity and thus exhibits good affinity to the thermoplastic resin having the polar substituent, and that the styrene portion has good affinity to Component (A).

Group (III)

Rubber-like polymers such as natural rubber, polybutadiene, polyisoprene, polyisobutylene, neoprene, ethylene-propylene copolymer rubber (EPR), ethylene-propylene-diene methylene linkage copolymer rubber (EPDM), polysulfide rubber, thiokol rubber, acryl rubber, urethane rubber, silicone rubber, epichlorohydrin rubber, polyetherester rubber, and polyesterester rubber. These rubbers are not compatible with the styrene-based polymers having mainly syndiotactic configuration as Component (A). They are preferably used depending on the purpose of use of the resin composition of the present invention.

When polyolefin, such as LDPE, LLDPE, HDPE, PP, PB-1 or poly4-methylpentene-1 is used as Component (B), EPR or EPDM is preferably used as rubber-like polymer of Group III.

Rubber-like polymers to be used as Component (C) can be divided into the above groups (I) to (III). However, it is to be noted that the groups are not strictly divided and partially overlap with each other. One or more rubber-like polymers are used. More specifically, depending on the purpose of use of the resin composition and characteristics required, two or more rubber-like polymers selected from the same group can be used in combination, or two or more rubber-like polymers selected from different groups can be used in combination.

The proportion of Component (A), (B) or (C) in the composition of the present invention is not critical and can be determined appropriately depending on the type of Component (B) or (C), the purpose of use of the composition and characteristics required therefor. The composition usually comprises 2 to 98% by weight of Component (A) and 98 to 2% by weight of the total of Components (B) and (C), and preferably 10 to 95% by weight of Component (A) and 90 to 5% by weight of the total of Components (B) and (C).

In another embodiment of the present invention, the composition contains (D) an inorganic filler as well as Components (A), (B) and (C). The inorganic filler may be fibrous, granular or powder in the form. Examples of the fibrous filler are glass fiber, carbon fiber, and alumina fiber. Of these fiber, glass fiber and carbon fiber are particularly preferred. The shape of the glass fiber is cloth-like, mat-like, strand-like, short fiber-like, and filament-like. Of these fibers, strand-like glass fiber having a length of 0.05 to 13 mm and a fiber diameter of 5 to 15 $\mu$m is preferred. Most preferable is the strand-like glass fiber subjected to silane treatment.

As the carbon fiber, polyacrylonitrile (PAN)-based fiber is preferred. Bundles of the chopped PAN fiber with a length of about 3 mm and a diameter of 7 to 15 $\mu$m are more preferable.

Examples of granular or powder inorganic fillers are talc, carbon black, graphite, titanium dioxide, silica, mica, calcium carbonate, calcium sulfate, barium carbonate, magnesium carbonate, magnesium sulfate, barium sulfate, magnesium oxysulphate, tin oxide, alumina, kaolin, silicon carbide, and metal powder. Of these fillers, titanium dioxide is most preferable. The crystal form of titanium dioxide is rutile, brucite or anatase. Titanium dioxide of the rutile or anatase structure, having an average particle diameter of 0.15 to 0.40 $\mu$m is preferred. It may be treated with Zn, Al and Si.

In cases where Component (D) is added, the proportion of Component (A), (B) or (C) can be chosen from a wide range. More specifically, the proportion of Component (A) in the composition is 1 to 98% by weight, preferably 5 to 98% by weight and most preferably 10 to 95% by weight, the total proportion of Components (B) and (C) is 1 to 98% by weight, preferably 3 to 95% by weight and most preferable 5 to 90% by weight. The proportion of Component (D) is 1 to 60% by weight, preferably 2 to 55% by weight and most preferably 3 to 50% by weight.

The composition of the present invention is composed of Components (A), (B) and (C), or Components (A), (B), (C) and (D). If necessary, various additives such as a nucleating agent, an antioxidant, a plasticizer, an ultraviolet ray inhibitor, a lubricant, a coloring agent, an antistatic agent, a thermal stabilizer and a flame retardant can be added.

The composition of the present invention can be prepared by compounding Components (A), (B) and (C), and other components if necessary, and kneading the resulting mixture at a suitable temperature, e.g.,

5

270 to 320°C. Compounding and kneading can be carried out by usual methods. More specifically, the melt kneading method using a kneader, a mixing roll, an extruder, a Vanbury mixer, a Henschel mixer and kneading roll, or the solution blending method can be employed.

The styrene-based resin composition of the present invention is excellent in heat resistance and at same time, in physical properties such as impact resistance, stiffness, tensile strength, and modulus in tension.

The styrene-based resin composition of the present invention is expected to be widely used as an industrial material for which heat resistance and various physical properties are required, particularly as raw material for injection molding or extrusion molding.

The present invention is described in greater detail with reference to the following examples.

REFERENCE EXAMPLE 1

(Preparation of Polystyrene having Syndiotactic Configuration)

2 L (L = liter) of toluene as a solvent, and 5 mmol of tetraethoxytitanium and 500 mmol (as aluminum atom) of methylaluminoxane as catalyst components were placed in a reactor, and 15 L of styrene was introduced thereinto and polymerized for 4 hours at 50°C.

After the completion of polymerization, the reaction product was washed with a mixture of hydrochloric acid and methanol to decompose and remove the catalyst components, and then dried to obtain 2.5 kg of a styrene polymer polystyrene). The polymer was subjected to Soxhlet extraction using methyl ethyl ketone as a solvent to obtain 95% by weight of an extraction residue. The weight average molecular weight of the polymer was 800,000. A $^{13}$C-NMR analysis (solvent: 1,2-dichlorobenzene) showed an absorption at 145.35 ppm, ascribable to the syndiotactic configuration, and the syndiotacticity indicated in terms of racemic pentad as calculated from the peak area was 96%.

EXAMPLE 1

100 parts by weight of a mixture consisting of 66.7% by weight of the polystyrene having syndiotactic configuration as obtained in Reference Example 1, 28.6% by weight of linear low density polyethylene (trade name: Idemitsu Polyethylene L1014D, produced by Idemitsu Petrochemical Co., Ltd.) as a thermoplastic resin, and 4.7% by weight of a styrene-hydrogenated butadiene block copolymer (trade name G1652, produced by Shell Chemical Co., Ltd.) were kneaded in a single-screw extruder having an inner diameter of 25 mm and injection molded by the use of a minimat molding machine to form a test piece, which was then measured for mechanical strength. The Vicat softening temperature was measured according to JIS-K7206. The results are shown in Table 1.

EXAMPLE 2

The procedure of Example 1 was repeated with the exception that a mixture of 66.7% by weight of the polystyrene having syndiotactic configuration, 28.6% by weight of high density polyethylene (trade name: Idemitsu Polyethylene 110J, produced by Idemitsu Petrochemical Co., Ltd.) as a thermoplastic resin and 4.7% by weight of a styrene-hydrogenated butadiene block copolymer (trade name: G-1652, produced by Shell Chemical Co., Ltd.) as a rubber-like polymer was used. The results are shown in Table 1.

EXAMPLE 3

The procedure of Example 1 was repeated with the exception that a mixture of 69.3% by weight of the polystyrene having syndiotactic configuration, 29.7% by weight of polypropylene (trade name: Idemitsu Polypropylene J-700G, produced by Idemitsu Petrochemical Co., Ltd.) as a thermoplastic resin and 1.0% by weight of a styrene-hydrogenated butadiene block copolymer (trade name: G-1652, produced by Shell Chemical Co., Ltd.) as a rubber-like polymer was used. The results are shown in Table 1.

Table 1

| No. | Modulus in Tension (kg/cm$^2$) | Tensile Strength (kg/cm$^2$) | Izod Impact Strength (notched) (kg•cm/cm) | Vicat Softening Temperature (°C) |
|---|---|---|---|---|
| Example 1 | 22000 | 560 | 5.2 | 215 |
| Example 2 | 28000 | 538 | 6.7 | 230 |
| Example 3 | 28000 | 529 | 3.0 | 215 |

REFERENCE EXAMPLE 2

(Production of Polystyrene having Mainly Syndiotactic Configuration)

2 L of toluene as a solvent, and 5 mmol of tetraethoxytitanium and 500 mmol (as aluminum atom) of methylaluminoxane as catalyst components were placed in a reactor, and 15 L of styrene was introduced thereinto and polymerized for 4 hours at 55°C.

After the completion of polymerization, the reaction product was washed with a mixture of hydrochloric acid and methanol to decompose and remove the catalyst components, and then dried to obtain 2.5 kg of a styrene polymer (polystyrene). The polymer was subjected to Soxhlet extraction using methyl ethyl ketone as a solvent to obtain 97% by weight of an extraction residue. The weight average molecular weight of the extraction residue was 400,000. A $^{13}$C-NMR analysis (solvent: 1,2-dichlorobenzene) of the polymer showed an absorption at 145.35 ppm, ascribable to the syndiotactic configuration, and the syndiotacticity indicated in terms of racemi pentad as calculated from the peak area was 98%.

Example 4

75 parts of weight of the polystyrene having mainly syndiotactic configuration obtained in Reference Example 2, 25 parts by weight of block polypropylene (trade name; Idemitsu Polypro® J785H, produced by Idemitsu Petrochemical Co., Ltd.) having melt index of 10 g/10 min. and containing 15% by weight of EPR rubber as a thermoplastic resin, and 15 parts by weight of SEP (trade name; Kraton® GX-1701, produced by Shell Chemical Co., Ltd.) as a rubber-like polymer were kneaded in a single-screw extruder having an inner diameter of 20 mm at the temperature of 290°C and pelletized. The pellets were injection-molded by an injection-molder MIN-7 produced by Niigata Tekko Co., Ltd. The Izod impact strength according to JIS-K7110, the tensile strength according to JIS-K7203 and the Vicat softening point according to JIS-K7206 were measured. The results are shown in Table 2.

Example 5

The procedure of Example 4 was repeated with the exception that 50 parts by weight of the polystyrene having mainly syndiotactic configuration obtained in Reference Example 2, 50 parts by weight of block polypropylene (trade name; Idemitsu Polypro® J785H, produced by Idemitsu Petrochemical Co., Ltd.) having melt index of 10 g/10 min. and containing 15% by weight of EPR rubber as a thermoplastic resin, and 15 parts by weight of SEP (trade name; Kraton® GX-1701, produced by Shell Chemical Co., Ltd.) as a rubber-like polymer were used. The results are shown in Table 2.

Comparative Example 1

The procedure of Example 4 was repeated with the exception that 100 parts by weight of the polystyrene having mainly syndiotactic configuration obtained in Reference Example 2, and 15 parts by weight of SEP (trade name; Kraton® GX-1701, produced by Shell Chemical Co., Ltd.) as a rubber-like polymer were used and a block polypropylene as a thermoplastic resin was not used. The results are shown in Table 2.

Comparative Example 2

The procedure of Example 4 was repeated with the exception that 50 parts by weight of the polystyrene having mainly syndiotactic configuration obtained in Reference Example 2 and 50 parts by weight of the block polypropylene (trade name; Idemitsu Polypro® J785H) as a thermoplastic resin were used and a rubber-like polymer was not used. The results are shown in Table 2.

Example 6

75 parts by weight of the polystyrene having mainly syndiotactic configuration obtained in Reference Example 2, 25 parts by weight of block polypropylene (trade name; Idemitsu Polypro® J785H, produced by Idemitsu Petrochemical Co., Ltd.) having melt index of 10 g/10 min. and containing 15% by weight of EPR rubber as a thermoplastic resin, and 15 parts by weight of SIS (trade name; Kraton® D-1111, produced by Shell Chemical Co., Ltd.) as a rubber-like polymer and 1.15 parts of the Sumilizer GM produced by Sumitomo Chemical Co., Ltd. as an antioxidant were kneaded in a single-screw extruder having an inner diameter of 20 mm at the temperature of 280°C and pelletized. The procedure of Example 4 was repeated. The results are shown in Table 2.

Example 7

The procedure of Example 6 was repeated with the exception that 50 parts by weight of the polystyrene having mainly syndiotactic configuration obtained in Reference Example 2, 50 parts by weight of block polypropylene (trade name; Idemitsu Polypro® J785H, produced by Idemitsu Petrochemical Co., Ltd.) having melt index of 10 g/10 min. and containing 15% by weight of EPR rubber as thermoplastic resin, and 15 parts by weight of SIS (trade name; Kraton® D-1111, produced by Shell Chemical Co., Ltd.) as a rubber-like polymer and 1.15 parts of the Sumilizer GM produced by Sumitomo Chemical Co., Ltd. as an antioxidant were used. The results are shown in Table 2.

Example 8

The procedure of Example 6 was repeated with the exception that 25 parts by weight of the polystyrene having mainly syndiotactic configuration obtained in Reference Example 2, 75 parts by weight of block polypropylene (trade name; Idemitsu Polypro® J785H, produced by Idemitsu Petrochemical Co., Ltd.) having melt index of 10 g/10 min. and containing 15% by weight of EPR rubber as thermoplastic resin, and 15 parts by weight of SIS (trade name; Kraton® D-1111 produced by Shell Chemical Co., Ltd.) as a rubber-like polymer and 1.15 parts of the Sumilizer GM produced by Sumitomo Chemical Co., ltd. as an antioxidant were used. The results are shown in Table 2.

Example 9

The procedure of Example 6 was repeated with the exception that 75 parts by weight of the polystyrene having mainly syndiotactic configuration obtained in Reference Example 2, 25 parts by weight of block polypropylene (trade name; Idemitsu Polypro® J785H, produced by Idemitsu Petrochemical Co., Ltd.) having melt index of 10 g/10 min. and containing 15% by weight of EPR rubber as thermoplastic resin, and 15 parts by weight of SEBS (trade name; Kraton® G-1650, produced by Shell Chemical Co., Ltd.) as a rubber-like polymer were used. The results are shown in Table 2.

Example 10

82.7 parts by weight of the polystyrene having mainly syndiotactic configuration obtained in Reference Example 2, 17.3 parts by weight of linear low density polyethelene (trade name; Idemitsu Moatec® 0138N produced by Idemitsu Petrochemical Co., Ltd.) as a thermoplastic resin and 7.7 parts by weight of SEBS (trade name; Kraton® G-1650, produced by Shell Chemical Co., Ltd.) as a rubber-like polymer were kneaded in a twin-screw extruder having an inner diameter of 20 mm at the temperature of 290°C and pelletized. The pellets were injection-molded by an injection-molder MIN-7 produced by Niigata Tekko Co., Ltd. The Izod impact strength according to JIS-K7110, the tensile strength according to JIS-K7113, and the Vicat softening point according to JIS-K7206 were measured. The results are shown in Table 3.

Comparative Example 3

The procedure of Example 10 was repeated with the exception that 82.7 parts by weight of the polystyrene having mainly syndiotactic configuration obtained in Reference Example 3 and 17.3 parts by weight of the linear low density polyethylene (trade name; Idemitsu Moatec® 0138N, produced by Idemitsu Petrochemical Co., Ltd.) were used and the SEBS was not used. The results are shown in Table 3.

Table 2

| No. | Modulus in Tension (kg/cm$^2$) | Tensile Strength (kg/cm$^2$) | Izod Impact Strength (notched) (kg·cm/cm) | Vicat Softening Temperature (°C) |
|---|---|---|---|---|
| Example 4 | 21000 | 430 | 8.6 | 152 |
| Example 5 | 17000 | 370 | 8.5 | 140 |
| Comparative Example 1 | 31000 | 780 | 2.3 | 245 |
| Comparative Example 2 | 20000 | 350 | 1.8 | 138 |
| Example 6 | 20000 | 410 | 6.1 | 167 |
| Example 7 | 15000 | 330 | 8.2 | 142 |
| Example 8 | 12000 | 270 | 5.2 | 142 |
| Example 9 | 23000 | 560 | 4.8 | 158 |

Table 3

| No. | Elongation at Breakage (%) | Izod Impact Strength (notched) (kg·cm/cm) | Vicat Softening Temperature (°C) |
|---|---|---|---|
| Example 10 | 6.4 | 3.1 | 227 |
| Comparative Example 3 | 2.3 | 1.8 | 230 |

Example 11

30 parts by weight of the polystyrene having mainly syndiotactic configuration obtained in Reference Example 2, 70 parts by weight of Nylon® 66 (trade name; UBE Nylon® 2023, produced by Ube Kosan Co., Ltd.) as a thermoplastic resin, and 20 parts by weight of SEBS modified with maleic acid (trade name; Kraton® FG1901X, produced by Shell Chemical Co., Ltd.) as a rubber-like polymer were kneaded in a twin-screw extruder having an inner diameter of 20 mm at the temperatur of 300°C and pelletized. The pellets were injection-molded by an injection-molder MIN-7 produced by Niigata Tekko Co., Ltd.. The Izod impact strength was measured according to JIS-K7110. After the test piece for the Izod impact strength was completely soaked and boiled in a boiling water for 8 hours, weight change rate was measured. The results are shown in Table 4.

Comparative Example 4

The procedure of Example 11 was repeated with the exception that 100 parts by weight of the polystyrene having mainly syndiotactic configuration obtained in Reference Example 2 and 20 parts by weight of SEBS modified with maleic acid (trade name; Kraton® FG1901X, produced by Shell Chemical Co., Ltd.) as a rubber-like polymer were used and Nylon 66 was not used. The results are shown in Table 4.

Comparative Example 5

Only Nylon 66 (UBE Nylon® 2023, produced by Ube Kosan Co., Ltd.) was injection-molded. The evaluation of Example 11 was repeated. The results are shown in Table 4.

## Table 4

| No. | Izod impact Strength (notched, room temperature) (kg·cm/cm ) | Ratio of[1] Weight Change (%) |
|---|---|---|
| Example 11 | 13.5 | +3.1 |
| Comparative Example 4 | 2.1 | +1.5 |
| Comparative Example 5 | 5.0 | +8.1 |

[1]  Ratio of Weight change (%) =

$$100 \times \frac{\text{weight of test piece after soakage (g)} - \text{weight of test piece before soakage (g)}}{\text{weight of test piece before soakage (g)}}$$

Example 12

56 parts by weight of the polystyrene having mainly syndiotactic configuration obtained in Reference Example 2, 30 parts by weight of Polyacrylate produced by Du Pont Co., Ltd. as a thermoplastic resin and 14 parts by weight of MBS rubber (trade name; Metablen® IP-13, produced by Mitsubishi Rayon Co., Ltd.) as a rubber-like polymer were kneaded in a single-screw extruder having an inner diameter of 20 mm at the temperature of 300°C and pelletized. The pellets were injection-molded by an injection-molder MIN-7 produced by Niigata Tekko Co., Ltd.. The tensile strength according to JIS-K7203 and the heat distortion temperature according to JIS-K7270 were measured. The results are shown in Table 5.

Comparative Example 6

The procedure of Example 12 was repeated with the exception that 80 parts by weight of the polystyrene having mainly syndiotactic configuration obtained in Reference Example 2 and 20 parts by weight of MBS rubber (trade name; Metablen IP-13, produced by Mitsubishi Rayon Co., Ltd.) as a rubber-like polymer were used and polyarylate was not used. The results are shown in Table 5.

Comparative Example 7

The procedure of Example 12 was repeated with the exception that only Polyarylate produced by Du Pont Co., Ltd. was injection-molded. The results are shown in Table 5.

EP 0 324 398 B1

Table 5

| No. | Modulus in Tension (kg/cm$^2$) | Heat Distortion Temperature (low load) (°C) | Vicat Softening Temperature (°C) |
|---|---|---|---|
| Example 12 | 28500 | 165 | 240 |
| Comparative Example 6 | 27000 | 110 | 255 |
| Comparative Example 7 | 23000 | 180 | 190 |

REFERENCE EXAMPLE 3

(Production of Polystyrene having Mainly Syndiotactic Configuration)

2 L of toluene as a solvent, and 1 mmol of cyclopentadienyltitanium trichloride and 0.8 mol (as aluminum atom) of methylaluminoxane as catalyst components were placed in a reactor, and 3.6 L of styrene was added and polymerized at 20°C for one hour. After the completion of polymerization, the reaction product was washed with a mixture of hydrochloric acid and methanol to decompose and remove the catalyst components, and then dried to obtain 330 g of a polymer.

This polymer was subjected to Soxhlet extraction using methyl ethyl ketone as a solvent to obtain 95% by weight of an extraction residue. The polymer (extraction residue) had a weight average molecular weight of 290,000, a number average molecular weight of 158,000 and a melting point of 270°C. A $^{13}$C-NMR analysis of the polymer showed an absorption at 145.35 ppm, ascribable to the syndiotactic structure, and the syndiotacticity indicated in terms of pentad as calculated from the peak area was 96%.

Example 13

75 parts by weight of the polystyrene having mainly syndiotactic configuration obtained in Reference Example 3, 25 parts by weight of block polypropylene (trade name; Idemitsu Polypro® J785H, produced by Idemitsu Petrochemical Co., Ltd.) having melt index of g/10 min. and containing 15% by weight of EPR rubber as a thermoplastic resin, 5 parts by weight of SIS (trade name; Kraton® D-1111) as a rubber-like polymer, 0.5 parts by weight of Sumilizer GM produced Sumitomo Chemical Co., Ltd. as an antioxidant and 45 parts by weight of glass fiber having an average fiber length of 3 mm (produced by Asahi Fiberglass Co., Ltd., fiber diameter: 10 to 15 μm, chopped strand form) were dry blended, and then kneaded in an extruder and pelletized to form a test piece, which was them measured for mechanical strength and the heat distortion temperature (high load). The results are shown in Table 6.

Example 14

The procedure of Example 13 was repeated with the exception that 50 parts by weight of the polystyrene having mainly syndiotactic configuration obtained in Reference Example 3, 50 parts by weight of block polypropylene (trade name; Idemitsu Polypro® J785H, produced by Idemitsu Petrochemical Co., Ltd.) having melt index of 10 g/10 min. and containing 15% by weight of EPR rubber as thermoplastic resin, 5 parts by weight of SEP (trade name; Kraton® GX-1701, produced by Shell Chemical Co., Ltd.) as a rubber-like polymer, and 45 parts by weight of glass fiber having an average fiber length of 3 mm produced Asahi Fiberglass Co., Ltd. were used. The results are shown in Table 6.

Comparative Example 8

The procedure of Example 13 was repeated with the exception that 70 parts by weight of block polypropylene (trade name; Idemitsu Polypro® J785H, produced by Idemitsu Petrochemical Co., Ltd.) having melt index of g/10 min. and containing 15% by weight of EPR rubber as a thermoplastic resin, and 30 parts by weight of glass fiber having an average fiber length of 3 mm produced by Asahi Fiberglass Co., Ltd. were used and the polystyrene having syndiotactic configuration and a rubber-like polymer were not used. The results are shown in Table 6.

11

Table 6

| No. | Modulus in Tension (kg/cm$^2$) | Tensile Strength (kg/cm$^2$) | Heat Distortion Temperature ($^\circ$C) |
|---|---|---|---|
| Example 13 | 93000 | 1300 | 210 |
| Example 14 | 73000 | 1200 | 170 |
| Comparative Example 8 | 52000 | 1100 | 151 |

**Claims**
**Claims for the following Contracting States : AT, BE, DE, CH, FR, GB, IT, NL, LI, SE,**

1. A styrene-based resin composition containing (A) a styrene-based resin with syndiotactic configuration of at least 30 % in the terms of racemic pentad, (B) a thermoplastic resin other than the styrene-based resin, and (C) at least one rubber-like polymer as main components with the exception of the composition consisting of 66.7 % b.w. polystyrene having syndiotactic configuration, 28.6 % b.w. ethylene-propylene rubber and 4.7 % b.w. of a styrene-hydrogenated butadiene block copolymer.

2. The composition as claimed in Claim 1, comprising 2 to 98% by weight of the styrene-based resin (A) and 98 to 2% by weight of the total of the thermoplastic resin (B) and the rubber-like polymer (C).

3. The composition as claimed in Claim 1 wherein the rubber-like polymer (C) is a polymer produced by polymerizing vinyl monomers in the presence of polymers obtained through polymerization of one or more monomers selected from the group consisting of alkyl acrylate, alkyl methacrylate and polyfunctional monomers having conjugated diene-type double bonds.

4. The composition as claimed in Claim 1 wherein the rubber-like polymer (C) is at least one block or graft copolymer selected from an a-b type block copolymer, an a-b-a type block copolymer, a b-a-b type block copolymer, an a grafted b copolymer and a b grafted a copolymer ;
wherein a is atactic polystyrene, and b is at least one polymer selected from conjugated diene, hydrogenated product of conjugated diene, conjugated diene modified with acid anhydride and hydrogenated product of conjugated diene modified with acid anhydride.

5. The composition as claimed in Claim 1 wherein the thermoplastic resin (B) is polyolefin, and the rubber-like polymer (C) is SBS, SIS, SEBS, SEPS, SB, SI, BSB, ISI, or hydrogenated product thereof.

6. The composition as claimed in Claim 1 wherein the thermoplastic resin (B) is polyester, polyamide or polycarbonate, and the rubber-like polymer (C) is maleated SBS, maleated SEBS, maleated SEP or maleated SIS.

7. The composition as claimed in Claim 1 wherein the thermoplastic resin (B) is polyolefin, and the rubber-like polymer (C) is EPR or EPDM.

8. A styrene-based resin composition containing (A) a styrene-based resin having syndiotactic configuration of at least 30 % in the terms of racemic pentad, (B) a thermoplastic resin other than the styrene-based resin, (C) a rubber-like polymer and (D) an inorganic filler.

9. The composition as claimed in Claim 8, comprising 1 to 98% by weight of the styrene-based polymer (A),98 to 1 % by weight of the total of the thermoplastic resin (B) and the rubber-like polymer (C), and 1 to 60% by weight of the inorganic filler (D).

**Claims for the following Contracting State : ES**

1. A styrene-based resin composition containing (A) a styrene-based resin with syndiotactic configuration of at least 30 % in the terms of racemic pentad, (B) a thermoplastic resin other than the styrene-based resin, and (C) at least one rubber-like polymer as main components with the exception of the composition consisting of 66.7 % b.w. polystyrene having syndiotactic configuration, 28.6 % b.w.

ethylene-propylene rubber and 4.7 % b.w. of a styrene-hydrogenated butadiene block copolymer.

2. The composition as claimed in Claim 1, comprising 2 to 98% by weight of the styrene-based resin (A) and 98 to 2% by weight of the total of the thermoplastic resin (B) and the rubber-like polymer (C).

3. The composition as claimed in Claim 1 wherein the rubber-like polymer (C) is a polymer produced by polymerizing vinyl monomers in the presence of polymers obtained through polymerization of one or more monomers selected from the group consisting of alkyl acrylate, alkyl methacrylate and polyfunctional monomers having conjugated diene-type double bonds.

4. The composition as claimed in Claim 1 wherein the rubber-like polymer (C) is at least one block or graft copolymer selected from an a-b type block copolymer, an a-b-a type block copolymer, a b-a-b type block copolymer, an a grafted b copolymer and a b grafted a copolymer ;
wherein a is atactic polystyrene, and b is at least one polymer selected from conjugated diene, hydrogenated product of conjugated diene, conjugated diene modified with acid anhydride and hydrogenated product of conjugated diene modified with acid anhydride.

5. The composition as claimed in Claim 1 wherein the thermoplastic resin (B) is polyolefin, and the rubber-like polymer (C) is SBS, SIS, SEBS, SEPS, SB, SI, BSB, ISI, or hydrogenated product thereof.

6. The composition as claimed in Claim 1 wherein the thermoplastic resin (B) is polyester, polyamide or polycarbonate, and the rubber-like polymer (C) is maleated SBS, maleated SEBS, maleated SEP or maleated SIS.

7. The composition as claimed in Claim 1 wherein the thermoplastic resin (B) is polyolefin, and the rubber-like polymer (C) is EPR or EPDM.

8. A styrene-based resin composition containing (A) a styrene-based resin having syndiotactic configuration of at least 30 % in the terms of racemic pentad, (B) a thermoplastic resin other than the styrene-based resin, (C) a rubber-like polymer and (D) an inorganic filler.

9. The composition as claimed in Claim 8, comprising 1 to 98% by weight of the styrene-based polymer (A), 98 to 1 % by weight of the total of the thermoplastic resin (B) and the rubber-like polymer (C), and 1 to 60% by weight of the inorganic filler (D).

10. A process for preparing a styrene-based resin composition containing (A) a styrene-based resin with syndiotactic configuration of at least 30 % in the terms of racemic pentad, (B) a thermoplastic resin other than the styrene-based resin, and (C) at least one rubber-like polymer as main components, which comprises compounding and kneading of components (A), (B) and (C) with the exception of the composition consisting of 66.7 % b.w. polystyrene having syndiotactic configuration, 28.6 % b.w. ethylene-propylene rubber and 4.7 % b.w. of a styrene-hydrogenated butadiene block copolymer.

11. A process for preparing a composition as claimed in Claim 10, comprising 2 to 98% by weight of the styrene-based resin (A) and 98 to 2% by weight of the total of the thermoplastic resin (B) and the rubber-like polymer (C).

12. A process for preparing a composition as claimed in Claim 10 wherein the rubber-like polymer (C) is a polymer produced by polymerizing vinyl monomers in the presence of polymers obtained through polymerization of one or more monomers selected from the group consisting of alkyl acrylate, alkyl methacrylate and polyfunctional monomers having conjugated diene-type double bonds.

13. A process for preparing a composition as claimed in Claim 10 wherein the rubber-like polymer (C) is at least one block or graft copolymer selected from an a-b type block copolymer, an a-b-a type block copolymer, a b-a-b type block copolymer, an a grafted b copolymer and a b grafted a copolymer ;
wherein a is atactic polystyrene, and b is at least one polymer selected from conjugated diene, hydrogenated product of conjugated diene, conjugated diene modified with acid anhydride and hydrogenated product of conjugated diene modified with acid anhydride.

**14.** A process for preparing a composition as claimed in Claim 10 wherein the thermoplastic resin (B) is polyolefin, and the rubber-like polymer (C) is SBS, SIS, SEBS, SEPS, SB, SI, BSB, ISI or hydrogenated product thereof.

**15.** A process for preparing a composition as claimed in Claim 10 wherein the thermoplastic resin (B) is polyester, polyamide or polycarbonate, and the rubber-like polymer (C) is maleated SBS, maleated SEBS, maleated SEP or maleated SIS.

**16.** A process for preparing a composition as claimed in Claim 10 wherein the thermoplastic resin (B) is polyolefin, and the rubber-like polymer (C) is EPR or EPDM.

**17.** A process for preparing a styrene-based resin composition containing (A) a styrene-based resin having syndiotactic configuration of at least 30 % in the terms of racemic pentad, (B) a thermoplastic resin other than the styrene-based resin, (C) a rubber-like polymer and (D) an inorganic filler, which comprises compounding and kneading of components (A), (B), (C), and (D).

**18.** A process for preparing a composition as claimed in Claim17, comprising 1 to 98% by weight of the styrene-based polymer (A),98 to 1 % by weight of the total of the thermoplastic resin (B) and the rubber-like polymer (C), and 1 to 60% by weight of the inorganic filler (D).

**Patentansprüche**
**Patentansprüche für folgende Vertragsstaaten : AT, BE, DE, CH, FR, GB, IT, NL, LI, SE**

**1.** Harzzusammensetzung auf Styrolbasis, die (A) ein Harz auf Styrolbasis mit einer syndiotaktischen Konfiguration von mindestens 30 % in Form von racemischem Pentad, (B) ein anderes thermoplastisches Harz als das Harz auf Styrolbasis, und (C) mindestens ein gummiartiges Polymer als Hauptkomponenten enthält, wobei die Zusammensetzung bestehend aus 66,7 Gew.-% Polystyrol mit syndiotaktischer Konfiguration, 28,6 Gew.-% Ethylenpropylengummi und 4,7 Gew.-% eines Styrol-hydrierten Butadien-Blockcopolymeren ausgenommen ist.

**2.** Zusammensetzung nach Anspruch 1 umfassend 2 bis 98 Gew.-% des Harzes (A) auf Styrolbasis und 98 bis 2 Gew.-% der Gesamtmenge an dem thermoplastischen Harz (B) und dem gummiartigen Polymer (C).

**3.** Zusammensetzung nach Anspruch 1, worin das gummiartige Polymer (C) ein Polymer ist, das durch Polymerisieren von Vinylmonomeren in Gegenwart von Polymeren hergestellt wurde, welche durch Polymerisation von einem oder mehreren Monomeren erhalten wurden, die ausgewählt sind aus der Gruppe bestehend aus Alkylacrylat, Alkylmethacrylat und polyfunktionellen Monomeren mit konjugierten dienartigen Doppelbindungen.

**4.** Zusammensetzung nach Anspruch 1, bei der das gummiartige Polymer (C) mindestens ein Block- oder Pfropfcopolymer ist, das ausgewählt ist aus einem a-b-artigen Blockcopolymer, einem a-b-a-artigen Blockcopolymer, einem b-a-b-artigen Blockcopolymer, einem a-gepfropften b-Copolymer und einem b-gepfropften a-Copolymer, wobei a ein ataktisches Polystyrol und b mindestens ein Polymer ausgewählt aus konjugiertem Dien, einem hydrierten Produkt eines konjugierten Diens, ein mit einem Säureanhydrid modifizierten konjugierten Dien und einem hydrierten Produkt eines mit einem Säureanhydrid modifizierten konjugierten Diens ist.

**5.** Zusammensetzung nach Anspruch 1, bei der das thermoplastische Harz (B) ein Polyolefin ist und das gummiartige Polymer (C) SBS, SIS, SEBS, SEPS, SB, SI, BSB, ISI oder eines ihrer hydrierten Produkte ist.

**6.** Zusammensetzung nach Anspruch 1, worin das thermoplastische Harz (B) ein Polyester, Polyamid oder Polycarbonat ist und das gummiartige Polymer (C) maleiniertes SBS, maleiniertes SEBS, maleiniertes SEP oder maleiniertes SIS ist.

**7.** Zusammensetzung nach Anspruch 1, worin das thermoplastische Harz (B) ein Polyolefin ist und das gummiartige Polymer (C) EPR oder EPDM ist.

**8.** Harzzusammensetzung auf Styrolbasis enthaltend (A) ein Harz auf Styrolbasis mit syndiotaktischer Konfiguration von mindestens 30 % in Form von racemischem Pentad, (B) ein anderes thermoplastisches Harz als das Harz auf Styrolbasis, (C) ein gummiartiges Polymer und (D) einen anorganischen Füllstoff.

**9.** Zusammensetzung nach Anspruch 8, umfassend 1 bis 98 Gew.-% des Polymeren (A) auf Styrolbasis, 98 bis 1 Gew.-% der Gesamtmenge an dem thermoplastischen Harz (B) und dem gummiartigen Polymer (C) und 1 bis 60 Gew.-% des anorganischen Füllstoffs (D).

**Patentansprüche für folgenden Vertragsstaat: ES**

**1.** Harzzusammensetzung auf Styrolbasis, die (A) ein Harz auf Styrolbasis mit einer syndiotaktischen Konfiguration von mindestens 30 % in Form von racemischen Pentad, (B) ein anderes thermoplastisches Harz als das Harz auf Styrolbasis, und (C) mindestens ein gummiartiges Polymer als Hauptkomponenten enthält, wobei die Zusammensetzung bestehend aus 66,7 Gew.-% Polystyrol mit syndiotaktischer Konfiguration, 28,6 Gew.-% Ethylenpropylengummi und 4,7 Gew.-% eines Styrol-hydrierten Butadien-Blockcopolymeren ausgenommen ist.

**2.** Zusammensetzung nach Anspruch 1 umfassend 2 bis 98 Gew.-% des Harzes (A) auf Styrolbasis und 98 bis 2 Gew.-% der Gesamtmenge an dem thermoplastischen Harz (B) und dem gummiartigen Polymer (C).

**3.** Zusammensetzung nach Anspruch 1, worin das gummiartige Polymer (C) ein Polymer ist, das durch Polymerisieren von Vinylmonomeren in Gegenwart von Polymeren hergestellt wurde, welche durch Polymerisation von einem oder mehreren Polymeren erhalten wurden, die ausgewählt sind aus der Gruppe bestehend aus Alkylacrylat, Alkylmethacrylat und polyfunktionellen Monomeren mit konjugierten dienartigen Doppelbindungen.

**4.** Zusammensetzung nach Anspruch 1, bei der das gummiartige Polymer (C) mindestens ein Block- oder Pfropfcopolymer ist, das ausgewählt ist aus einem a-b-artigen Blockcopolymer, einem a-b-a-artigen Blockcopolymer, einem b-a-b-artigen Blockcopolymer, einem a-gepfropften b-Copolymer und einem b-gepfropften a-Copolymer, wobei a ein ataktisches Polystyrol und b mindestens ein Polymer ausgewählt aus konjugiertem Dien, einem hydrierten Produkt eines konjugierten Diens, ein mit einem Säureanhydrid modifizierten konjugierten Dien und einem hydrierten Produkt eines mit einem Säureanhydrid modifizierten konjugierten Diens ist.

**5.** Zusammensetzung nach Anspruch 1, bei der das thermoplastische Harz (B) ein Polyolefin ist und das gummiartige Polymer (C) SBS, SIS, SEBS, SEPS, SB, SI, BSB, ISI oder eines ihrer hydrierten Produkte ist.

**6.** Zusammensetzung nach Anspruch 1, worin das thermoplastische Harz (B) ein Polyester, Polyamid oder Polycarbonat ist und das gummiartige Polymer (C) maleiniertes SBS, maleiniertes SEBS, maleiniertes SEP oder maleiniertes SIS ist.

**7.** Zusammensetzung nach Anspruch 1, worin das thermoplastische Harz (B) ein Polyolefin ist und das gummiartige Polymer (C) EPR oder EPDM ist.

**8.** Harzzusammensetzung auf Styrolbasis enthaltend (A) ein Harz auf Styrolbasis mit syndiotaktischer Konfiguration von mindestens 30 % in Form von racemischem Pentad, (B) ein anderes thermoplastisches Harz als das Harz auf Styrolbasis, (C) ein gummiartiges Polymer und (D) einen anorganischen Füllstoff.

**9.** Zusammensetzung nach Anspruch 8, umfassend 1 bis 98 Gew.-% des Polymeren (A) auf Styrolbasis, 98 bis 1 Gew.-% der Gesamtmenge an dem thermoplastischen Harz (B) und dem gummiartigen Polymer (C) und 1 bis 60 Gew.-% des anorganischen Füllstoffs (D).

**10.** Verfahren zur Herstellung einer Harzzusammensetzung auf Styrolbasis enthaltend (A) ein Harz auf Styrolbasis mit einer syndiotaktischen Konfiguration von mindestens 30 % in Form von racemischem

EP 0 324 398 B1

Pentad, (B) ein anderes thermoplastisches Harz als das Harz auf Styrolbasis, und (C) mindestens ein gummiartiges Polymer als Hauptkomponenten, umfassend das Compoundieren und Kneten der Komponenten (A), (B) und (C), wobei die Verbindung bestehend aus 66,7 Gew.-% Polystyrol mit syndiotaktischer Konfiguration, 28,6 Gew.-% Ethylenpropylengummi und 4,7 Gew.-% eines Styrol-hydrierten Butadien-Blockcopolymeren ausgenommen ist.

11. Verfahren zur Herstellung einer Zusammensetzung nach Anspruch 10, umfassend 2 bis 98 Gew.-% des Harzes (A) auf Styrolbasis und 98 bis 2 Gew.-% der Gesamtmenge an dem thermoplastischen Harz (B) und dem gummiartigen Polymer (C).

12. Verfahren zur Herstellung einer Zusammensetzung nach Anspruch 10, worin das gummiartige Polymer (C) ein Polymer ist, das durch Polymerisieren von Vinylmonomeren in Gegenwart von Polymeren hergestellt wurde, welche durch Polymerisation von einem oder mehreren Monomeren erhalten wurden, die ausgewählt sind aus der Gruppe bestehend aus Alkylacrylat, Alkylmethacrylat und polyfunktionellen Monomeren mit konjugierten dienartigen Doppelbindungen.

13. Verfahren zur Herstellung einer Zusammensetzung nach Anspruch 10, bei der das gummiartige Polymer (C) mindestens ein Block- oder Pfropfcopolymer ist, das ausgewählt ist aus einem a-b-artigen Blockcopolymer, einem a-b-a-artigen Blockcopolymer, einem b-a-b-artigen Blockcopolymer, einem a-gepfropften b-Copolymer und einem b-gepfropften a-Copolymer, wobei a ein ataktisches Polystyrol und b mindestens ein Polymer ausgewählt aus konjugiertem Dien, einem hydrierten Produkt eines konjugierten Diens, einem mit einem Säureanhydrid modifizierten konjugierten Dien und einem hydrierten Produkt eines mit einem Säureanhydrid modifizierten konjugierten Diens ist.

14. Verfahren zur Herstellung einer Zusammensetzung nach Anspruch 10, bei der das thermoplastische Harz (B) ein Polyolefin ist und das gummiartige Polymer (C) SBS, SIS, SEBS, SEPS, SB, SI, BSB, ISI oder eines ihrer hydrierten Produkte ist.

15. Verfahren zur Herstellung einer Zusammensetzung nach Anspruch 10, worin das thermoplastische Harz (B) ein Polyester, Polyamid oder Polycarbonat ist und das gummiartige Polymer (C) maleiniertes SBS, maleiniertes SEBS, maleiniertes SEP oder maleiniertes SIS ist.

16. Verfahren zur Herstellung einer Zusammensetzung nach Anspruch 10, worin das thermoplastische Harz (B) ein Polyolefin ist und das gummiartige Polymer (C) EPR oder EPDM ist.

17. Verfahren zur Herstellung einer Harzzusammensetzung auf Styrolbasis, enthaltend (A) ein Harz auf Styrolbasis mit syndiotaktischer Konfiguration von mindestens 30 % in Form von racemischem Pentad, (B) ein anderes thermoplastisches Harz als das Harz auf Styrolbasis, (C) ein gummiartiges Polymer und (D) einen anorganischen Füllstoff, umfassend das Compoundieren und Kneten der Komponenten (A), (B), (C) und (D).

18. Verfahren zur Herstellung einer Zusammensetzung nach Anspruch 17, umfassend 1 bis 98 Gew.-% des Polymeren (A) auf Styrolbasis, 98 bis 1 Gew.-% der Gesamtmenge an dem thermoplastischen Harz (B) und dem gummiartigen Polymer (C) und 1 bis 60 Gew.-% des anorganischen Füllstoffs (D).

**Revendications**
**Revendications pour les Etats contractants suivants : AT, BE, DE, CH, FR, GB, IT, NL, LI, SE**

1. Composition de résine à base de styrène contenant (A) une résine à base de styrène possédant une configuration syndiotactique d'au moins 30% en termes de groupe de cinq racémique, (B) une résine thermoplastique autre que la résine à base de styrène et (C) au moins un polymère de type caoutchouc comme composants majeurs, à l'exception de la composition constituée de 66,7% en poids de polystyrène de configuration syndiotactique, 28,6% en poids de caoutchouc éthylène-propylène et 4,7% en poids d'un copolymère séquencé styrène-butadiène hydrogéné.

2. Composition selon la revendication 1, comprenant 2 à 98% en poids de la résine à base de styrène (A) et 98 à 2% en poids du total de la résine thermoplastique (B) et du polymère de type caoutchouc (C).

16

**3.** Composition selon la revendication 1, dans laquelle le polymère de type caoutchouc (C) est un polymère produit par polymérisation de monomères vinyliques en présence de polymères obtenus par polymérisation d'un ou plusieurs monomères choisis dans le groupe constitué par un acrylate d'alkyle, un méthacrylate d'alkyle et des monomères polyfonctionnels contenant une double liaison diénique conjuguée.

**4.** Composition selon la revendication 1, dans laquelle le polymère de type caoutchouc (C) est au moins un copolymère séquencé ou greffé choisi parmi un copolymère séquencé de type a-b, un copolymère séquencé de type a-b-a, un copolymère séquencé de type b-a-b, un copolymère b greffé à a et un copolymère a greffé à b; dans laquelle a est un polystyrène atactique et b est au moins un polymère choisi parmi un diène conjugué, un produit hydrogéné d'un diène conjugué, un diène conjugué modifié par un anhydride d'acide et un produit hydrogéné d'un diène conjugué modifié par un anhydride d'acide.

**5.** Composition selon la revendication 1, dans laquelle la résine thermoplastique (B) est une polyoléfine et le polymère de type caoutchouc (C) est un SBS, un SIS, un SEBS, un SB, un SI, un BSB, un ISI ou un produit hydrogéné de ceux-ci.

**6.** Composition selon la revendication 1, dans laquelle la résine thermoplastique (B) est un polyester, un polyamide ou un polycarbonate, et le polymère de type caoutchouc (C) est du SBS maléaté, du SEBS maléaté, du SEP maléaté ou du SIS maléaté.

**7.** Composition selon la revendication 1, dans laquelle la résine thermoplastique (B) est une polyoléfine et le polymère de type caoutchouc (C) est un EPR ou un EPDM.

**8.** Composition de résine à base de styrène contenant (A) une résine à base de styrène possédant une configuration syndiotactique d'au moins 30% en termes de groupe de cinq racémique, (B) une résine thermoplastique autre que la résine à base de styrène, (C) un polymère de type caoutchouc et (D) une charge minérale.

**9.** Composition selon la revendication 8, comprenant 1 à 98% en poids du polymère à base de styrène (A), 98 à 1% en poids du total de la résine thermoplastique (B) et du polymère de type caoutchouc (C) et 1 à 60% en poids de la charge minérale (D).

**Revendications pour l'Etat contractant suivant : ES**

**1.** Composition de résine à base de styrène contenant (A) une résine à base de styrène possédant une configuration syndiotactique d'au moins 30% en termes de groupe de cinq racémique, (B) une résine thermoplastique autre que la résine à base de styrène et (C) au moins un polymère de type caoutchouc comme composants majeurs, à l'exception de la composition constituée de 66,7% en poids de polystyrène de configuration syndiotactique, 28,6% en poids de caoutchouc éthylène-propylène et 4,7% en poids d'un copolymère séquencé styrène-butadiène hydrogéné.

**2.** Composition selon la revendication 1, comprenant 2 à 98% en poids de la résine à base de styrène (A) et 98 à 2% en poids du total de la résine thermoplastique (B) et du polymère de type caoutchouc (C).

**3.** Composition selon la revendication 1, dans laquelle le polymère de type caoutchouc (C) est un polymère produit par polymérisation de monomères vinyliques en présence de polymères obtenus par polymérisation d'un ou plusieurs monomères choisis dans le groupe constitué par un acrylate d'alkyle, un méthacrylate d'alkyle et des monomères polyfonctionnels contenant une double liaison diénique conjuguée.

**4.** Composition selon la revendication 1, dans laquelle le polymère de type caoutchouc (C) est au moins un copolymère séquencé ou greffé choisi parmi un copolymère séquencé de type a-b, un copolymère séquencé de type a-b-a, un copolymère séquencé de type b-a-b, un copolymère b greffé à a et un copolymère a greffé à b; dans laquelle a est un polystyrène atactique et b est au moins un polymère choisi parmi un diène conjugué, un produit hydrogéné d'un diène conjugué, un diène conjugué modifié par un anhydride d'acide et un produit hydrogéné d'un diène conjugué modifié par un anhydride d'acide.

5. Composition selon la revendication 1, dans laquelle la résine thermoplastique (B) est une polyoléfine et le polymère de type caoutchouc (C) est un SBS, un SIS, un SEBS, un SB, un SI, un BSB, un ISI ou un produit hydrogéné de ceux-ci.

6. Composition selon la revendication 1, dans laquelle la résine thermoplastique (B) est un polyester, un polyamide ou un polycarbonate, et le polymère de type caoutchouc (C) est du SBS maléaté, du SEBS maléaté, du SEP maléaté ou du SIS maléaté.

7. Composition selon la revendication 1, dans laquelle la résine thermoplastique (B) est une polyoléfine et le polymère de type caoutchouc (C) est un EPR ou un EPDM.

8. Composition de résine à base de styrène contenant (A) une résine à base de styrène possédant une configuration syndiotactique d'au moins 30% en termes de groupe de cinq racémique, (B) une résine thermoplastique autre que la résine à base de styrène, (C) un polymère de type caoutchouc et (D) une charge minérale.

9. Composition selon la revendication 8, comprenant 1 à 98% en poids du polymère à base de styrène (A), 98 à 1% en poids du total de la résine thermoplastique (B) et du polymère de type caoutchouc (C) et 1 à 60% en poids de la charge minérale (D).

10. Procédé de préparation d'une composition de résine à base de styrène contenant (A) une résine à base de styrène possédant une configuration syndiotactique d'au moins 30% en termes de groupe de cinq racémique, (B) une résine thermoplastique autre que la résine à base de styrène et (C) au moins un polymère de type caoutchouc comme composants majeurs, qui comprend le compoundage et le pétrissage des constituants (A), (B) et (C), à l'exception de la composi-. tion constituée de 66,7% en poids de polystyrène de configuration syndiotactique, 28,6% en poids de caoutchouc éthylène-propylène et 4,7% en poids d'un copolymère séquencé styrène-butadiène hydrogéné.

11. Procédé de préparation d'une composition selon la revendication 10, comprenant 2 à 98% en poids de la résine à base de styrène (A) et 98 à 2% en poids du total de la résine thermoplastique (B) et du polymère de type caoutchouc (C).

12. Procédé de préparation d'une composition selon la revendication 10, dans lequel le polymère de type caoutchouc (C) est un polymère produit par polymérisation de monomères vinyliques en présence de polymères obtenus par polymérisation d'un ou plusieurs monomères choisis dans le groupe constitué par un acrylate d'alkyle, un méthacrylate d'alkyle et des monomères polyfonctionnels contenant une double liaison diénique conjuguée.

13. Procédé de préparation d'une composition selon la revendication 10, dans lequel le polymère de type caoutchouc (C) est au moins un copolymère séquencé ou greffé choisi parmi un copolymère séquencé de type a-b, un copolymère séquencé de type a-b-a, un copolymère séquencé de type b-a-b, un copolymère b greffé à a et un copolymère a greffé à b; dans lequel a est un polystyrène atactique et b est au moins un polymère choisi parmi un diène conjugué, un produit hydrogéné d'un diène conjugué, un diène conjugué modifié par un anhydride d'acide et un produit hydrogéné d'un diène conjugué modifié par un anhydride d'acide.

14. Procédé de préparation d'une composition selon la revendication 10, dans lequel la résine thermoplastique (B) est une polyoléfine et le polymère de type caoutchouc (C) est un SBS, un SIS, un SEBS, un SB, un SI, un BSB, un ISI ou un produit hydrogéné de ceux-ci.

15. Procédé de préparation d'une composition selon la revendication 10, dans lequel la résine thermoplastique (B) est un polyester, un polyamide ou un polycarbonate, et le polymère de type caoutchouc (C) est du SBS maléaté, du SEBS maléaté, du SEP maléaté ou du SIS maléaté.

16. Procédé de préparation d'une composition selon la revendication 10, dans lequel la résine thermoplastique (B) est une polyoléfine et le polymère de type caoutchouc (C) est un EPR ou un EPDM.

17. Procédé de préparation d'une composition de résine à base de styrène contenant (A) une résine à base de styrène possédant une configuration syndiotactique d'au moins 30% en termes de groupe de cinq racémique, (B) une résine thermoplastique autre que la résine à base de styrène, (C) un polymère de type caoutchouc et (D) une charge minérale, qui comprend le compoundage et le pétrissage des constituants (A), (B), (C) et (D).

18. Procédé de préparation d'une composition selon la revendication 17, comprenant 1 à 98% en poids du polymère à base de styrène (A), 98 à 1% en poids du total de la résine thermoplastique (B) et du polymère de type caoutchouc (C) et 1 à 60% en poids de la charge minérale (D).